(19) Europäisches Patentamt
European Patent Office
Office européen des brevets

(11) **EP 1 478 133 B1**

(12) **EUROPEAN PATENT SPECIFICATION**

(45) Date of publication and mention
of the grant of the patent:
**23.04.2008 Bulletin 2008/17**

(51) Int Cl.:
***H04L 12/56*** *(2006.01)*

(21) Application number: **03026824.7**

(22) Date of filing: **20.11.2003**

(54) **Preemptive precedence scheduler for communications link bandwidth**

Präemptive Ablaufsteuerung mit Präzedenz zur Bandbreitenkommunikationsverbindung

Ordonnanceur à précédence préemptif pour liaisons de communications à large bande

(84) Designated Contracting States:
**DE FR GB**

(30) Priority: **14.05.2003 US 437537**

(43) Date of publication of application:
**17.11.2004 Bulletin 2004/47**

(73) Proprietor: **NORTHROP GRUMMAN CORPORATION**
**Los Angeles, California 90067-2199 (US)**

(72) Inventor: **Courtney, William F.**
**Long beach, CA 90815 (US)**

(74) Representative: **Schmidt, Steffen J.**
**Wuesthoff & Wuesthoff,**
**Patent- und Rechtsanwälte,**
**Schweigerstrasse 2**
**81541 München (DE)**

(56) References cited:
**WO-A-02/07388** **WO-A-02/052768**
**US-B1- 6 188 698**

**Description**

BACKGROUND OF THE INVENTION

This invention relates to data communications and more specifically relates to the scheduling of data flow based on priority.

Today, there are four principal ways that bandwidth is allocated among data groups or data flows in times of bandwidth scarcity:

1) Data flows are admitted as long as band width is available, and once admitted a data flow receives a fixed share of the available bandwidth until its communication is completed. An example is the public switched telephone network (PSTN), where calls are connected if a circuit is available, and a call holds its circuit until a party hangs up. If a call demands a circuit when none is available, the calling party is denied service and gets a busy signal. If a call is assigned a circuit, then it consumes all the bandwidth of that circuit regardless of whether it actually has data to send or receive. Bandwidth in the circuit cannot be shared with other data flows, so any bandwidth that is not used by the assigned data flow is wasted.

2) Data flows are placed in a priority order. Available bandwidth is used first to satisfy the demand of the highest priority data flow, which may demand any amount of bandwidth, including all bandwidth available. If any bandwidth remains, it is used to satisfy the second high est priority data flow, (which a lso may demand any amount of bandwidth) and so on until either all the bandwidth is consumed or the lowest priority data flow has been served. An example is a Priority Queuing scheduler for Internet routers that offer a premium service to a few data flows and less than "best-effort" service to the rest of the data flows.

3) All data flows share equally in the available bandwidth. An example is the "best-effort" forwarding common to the Internet, where no packet or data flow receives any special consideration compared with other packets or data flows.

4) Each data flow is assigned a nominal amount of the available bandwidth. At any instant, the share available to a busy data flow (call the flow A) is equal to

$$\underline{\frac{\text{Total available bandwidth * flow A's nominal bandwidth}}{\text{Sum of all busy flows' nominal bandwidths}}}$$

At instants of low total demand, each busy data flow can use more than its nominal amount of bandwidth, (up to the entire amount of available bandwidth if it is the only data flow placing a demand at that instant). At instants of very high total demand, each busy data flow may receive less than its nominal bandwidth. An example of this type of allocation is a rate-proportional scheduler in an Internet router. (Note that allocation approach 3 is a special case of a rate-proportional scheduler where every data flow has the same nominal bandwidth.)

Each of these approaches has disadvantages. Approach 1 is wasteful of bandwidth since it allocates bandwidth for the duration of the communication and does not redistribute a given data flow's bandwidth to other data flows during the given data flow's quiet periods. Further, it treats all data flows equally, in the sense that circuits are allocated using a first-come/first-served discipline. Approach 2 cannot prevent high-priority data flows from abusing their priority and consuming all the available bandwidth. Approaches 3 and 4 cannot ensure that highest-priority data flows receive their expected bandwidth, because it does not really grant priorities. It allocates shares, and these shares become devalued at times of congestion when many other data flows are also busy. This invention addresses the foregoing problems and provides a solution.

BRIEF SUMMARY OF THE INVENTION

A preferred method embodiment of the invention is useful in a communication system for transmitting groups of digital communication data from a p lurality o f sources o ver a c ommunication n etwork having a bandwidth varying with time. In such an environment, bandwidth can be allocated by assigning to each group a predetermined amount of bandwidth and a priority. The data-carrying ability of at least a portion of the system is at least estimated.

The predetermined amount of bandwidth and priority assigned to current data groups presenting data for transmission over the network is identified, and the amount of bandwidth requested by the current data groups also is identified. Eligible current data groups are determined in response to at least the data-carrying ability, the predetermined amount of bandwidth and priority identified for the current data groups, and the amount of bandwidth requested by the current data groups. The data from the eligible current data groups is transmitted at the requested amount of bandwidth up to the predetermined amount of bandwidth assigned to the eligible current data groups.

A preferred apparatus embodiment of the invention also is useful in a communication system for transmitting groups of digital communication data from a plurality of sources over a communication network having a bandwidth varying with time. In such an environment, bandwidth can be allocated by providing an input receiving the communication data. A memory stores for each data group a bandwidth value indicative of a predetermined amount of bandwidth and a priority value indicative of priority. A processor at least estimates the data-carrying ability of at least a portion of the system, identifies the predetermined amount of bandwidth and priority assigned to current data groups presenting data for transmission over the network, identifies the amount of bandwidth requested by the current data groups, and determines eligible current data groups in response to at least the data-carrying ability, the predetermined amount of bandwidth and priority identified for the current data groups, and the amount of bandwidth requested by the current data groups. An output transmits data from the eligible current data groups at the requested amount of bandwidth up to the predetermined amount of bandwidth assigned to the eligible current data groups.

By using the foregoing techniques, bandwidth may be allocated with a degree of efficiency previously unattainable.

BRIEF DESCRIPTION OF THE DRAWINGS

Figure 1 is a schematic block diagram of a preferred form of apparatus embodying the invention.

Figure 2 is a flow diagram illustrating a preferred mode of operation of the apparatus shown in Figure 1.

DETAILED DESCRIPTION OF THE INVENTION

The applicant has discovered an approach to bandwidth allocation that recognizes priorities among data groups or data flows, is not wasteful of bandwidth, ensures that the higher-priority data flows receive their agreed-to bandwidth whenever possible, and yet does not permit the highest-priority flows to abuse their priorities by consuming more than their agreed-to bandwidth. This approach solves many important problems in provision of service. Namely, it:

1) Recognizes priority of data flows and thus provides a basis for a premium-service pricing plan for commercial systems; and

2) Ensures that the highest-priority data flows receive adequate bandwidth for their more important communications even when the network becomes congested.

Such an approach can be applied to satellite systems and re-configurable terrestrial mobile systems where network link bandwidth can fluctuate because of disruptions to the wireless link (caused by, for example, rain, intervening foliage or other obstructions in the RF (radio frequency) path, and interference from emitters outside the system) or to the link-terminating equipment. The approach can also be applied in wireline systems when network links are disrupted (for example, when a link is cut or link-switch or link-terminating equipment fails, causing disrupted traffic to be re-routed through what is left of the network) or where fluctuations in demand cause traffic to exceed the capacity of the link or the link-terminating equipment to handle it.

The preferred embodiment uses priority as the criterion for deciding which data flows or data groups receive bandwidth during times when all the data flows cannot be allocated their agreed-to amounts. But it does not use priority to make actual moment-by-moment bandwidth assignments to data flows. Instead, the preferred embodiment provides another decision layer above the layer that actually makes the moment-by-moment assignment decisions. This higher layer may be referred to as the PPS (preemptive priority scheduler). The lower-layer scheduler is not part of the preferred embodiment. Rather, the lower-layer scheduler is part of the current state-of-the-art network.

When demand exceeds available bandwidth, the number of data flows that are eligible for bandwidth is determined by summing the agreed-to bandwidth allocations starting with the agreed-to bandwidth of the highest-priority busy data flow and working down in priority order through the other busy data flows until some traffic engineering criteria dictates that no further data flows should be eligible.

A busy data flow is a data flow that currently has traffic for the network to carry. A data flow that currently has no traffic for the network is called unbusy or empty. The busy/empty status of a data flow can be ephemeral and fluctuating, with data flows temporarily becoming busy, then becoming empty, then becoming busy again, and so on. Various traffic engineering criteria may be used to decide how many data flows are eligible for bandwidth. An example of such a criterion is that data flows are made eligible until the addition of another data flow would cause the sum of bandwidth assigned to the eligible data flows to exceed some threshold percentage of the available bandwidth.

A busy data flow whose priority is so low that it is not made eligible by this process is then ineligible for bandwidth assignment, and thus receives a zero share. Then, a lower-layer assignment process (not part of the preferred embodiment) makes actual moment-by-moment bandwidth assignments from among the eligible data flows.

The PPS can be used in any situation where during times of congestion it is desirable that flows should not receive equal treatment. Examples of such situations are:

1) In a mobile wireless data network (especially in an ad-hoc mobile network where the infrastructure elements as well as the end users are mobile), it happens from time to time that the capacity of a network link decreases or increases. For example, a moving node may be able to sustain a link to another node only at a lower rate than is possible when neither node is moving. Rather than waste the difference in link capacity between when both nodes are still and when one or both are moving, the link can be ascribed to have the larger capacity, with the understanding that lower-priority flows are subject to be made ineligible for service when either node is moving.

2) In a satellite-based system, where the end-users communicate through a satellite, it happens from time to time that the capacity of a link can change. For example, rain can absorb a greater than usual amount of the RF energy of satellite-end user communications. Unless the network responds with a change in the forward error correction (FEC) coding of the link, the bit error rate (BER) of the link would rise to an unacceptable level. But, a more robust FEC consumes bandwidth t hat w ould u sually be available for user traffic. In such a situation, PPS would limit eligibility for access to the link to higher-priority data flows.

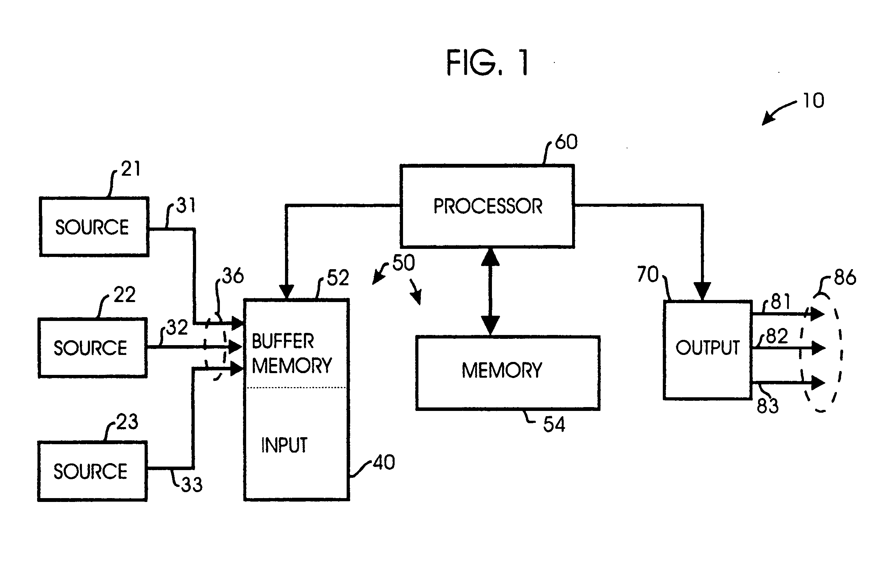

Referring to Fig. 1, a preferred form of the invention includes a communication system 10 that transmits groups of digital communication data (or data flow) from sources, such as 21-23, over input channels or links 31-33 that are collectively referred to as an input network 36. A n input 4 0 receives t he d ata from network 36 and stores the data in a memory 50 that includes a buffer memory 52 and a main memory 54. Buffer memory has a threshold and a predetermined size. A processor 60 executes an algorithm that allocates bandwidth among the data groups presented by the various sources 21-23. The processor outputs the data groups with the desired bandwidth allocation from memory 54 to an output 70. Output 70 transmits the data groups over output channels or links 81-83 collectively referred to as output network 86.

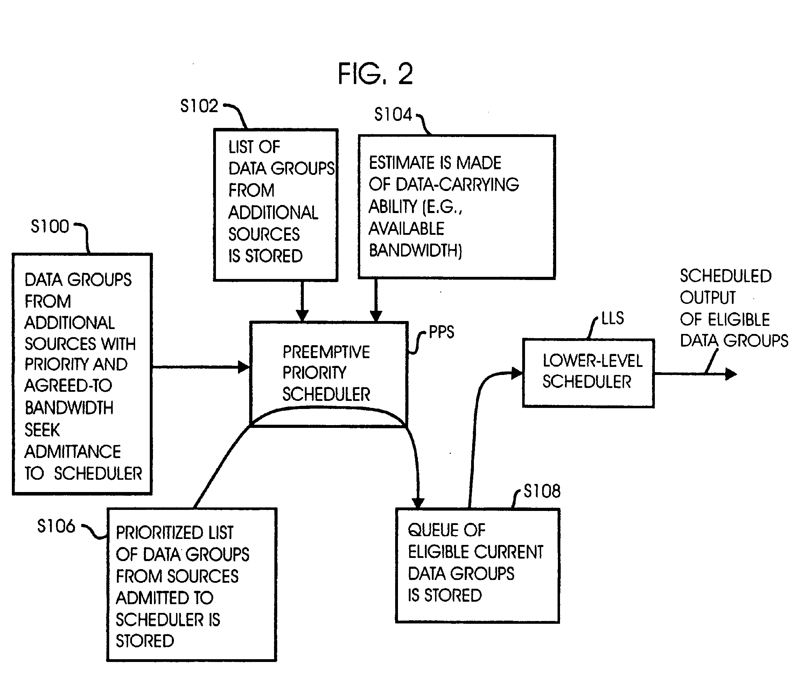

Fig. 2 illustrates a preferred form of the PPS algorithm executed by processor 60. In step S100, data groups from sources 21-23 stored in buffer memory 52 along with priority and requested bandwidth seek admittance to the PPS. For digital data, bandwidth generally is requested in units of bits per second. The bandwidth and priority are determined from an agreement with the operators of sources 21-23. In step S102, a list of data groups that are currently busy is stored.

In step S104, processor 60 makes an estimate of the data-carrying ability of at least a portion of system 10. The ability may be measured by the available bandwidth of network 86. The data groups in buffer memory 52 seek admittance to the PPS in order to be added to a prioritized list of data groups admitted to the PPS, which is stored in memory 54 in step S106.

The PPS performs several subfunctions under the control of processor 60 in order to achieve its purpose. They are:

1) Admitting or rejecting new data groups based on some traffic engineering criteria that measures data-carrying ability, such as

Available network 86 bandwidth,

Available buffer space in buffer memory 52,

Bandwidth allocated to already-admitted data groups stored in step S106,

Bandwidth requested by newly-arrived data groups seeking admittance to the PPS in step S 100,

Priority of already-admitted and newly-arrived data groups, and

Target amount of delay and delay-variation acceptable to already-admitted and newly-arrived data groups;

2) Maintaining in memory 54 a data structure of admitted data groups stored in step S106, where the data structure i ndicates t he allocated b andwidth and priority of the data groups,

3) Estimating available network 86 bandwidth using any of a variety of methods in step S104, e.g.,

Using network signaling to keep track of network 86 status and its effect on bandwidth (e.g., output network status up/down or current RF output network capacity),

Using buffer thresholds of buffer memory 52 to estimate network 86 congestion, and estimating available network 86 bandwidth from the estimated congestion,

Estimating available network 86 bandwidth from buffer memory 52 size, growth rate, and change in growth rate;

4) Selecting the data groups that are eligible for service based on a current estimate of available network 86 bandwidth by

(a) Selecting the data groups of the prioritized list stored in step S106 in priority order,

(b) Including eligible current data groups in the selection until the selected set of data groups violates traffic-engineering criteria used to determine how full output 70 is allowed to be (These criteria may or may not be the same criteria used to decide whether to admit or reject a newly-arrived flow.) More specifically, the PPS uses priority as the criterion for deciding which data groups stored in step S106 receive bandwidth during times when all the data groups cannot be allocated their agreed-to amounts of bandwidth. But the PPS does not use priority to make actual moment-by-moment bandwidth assignments to flows. Instead, the preferred embodiment provides another decision layer (i.e., layer LLS) below the PPS layer that actually makes the moment-by-moment assignment decisions.

When bandwidth demand exceeds available bandwidth, the number of data groups that are eligible for bandwidth is determined by summing the agreed-to bandwidth allocations starting with the agreed-to bandwidth of the highest-priority busy data group stored in step S106 and working down in priority order through the other busy data groups until the available bandwidth is consumed. A busy data group whose priority is so low that it is not reached by this summing is ineligible for bandwidth assignment (It is preempted.), and thus receives a zero share. Then, a lower-layer assignment process (LLS) makes actual moment-by-moment bandwidth assignments among the non-zero share data groups.

Because only the busy data groups are considered in the summation, the method does not waste bandwidth by reserving it for data groups that have no immediate need for it. Because the summation is made in priority order, the highest-priority data group receives first consideration for inclusion in the pool of data groups that will be assigned bandwidth. Because each non-zero-share data group contributes its full agreed-to bandwidth to the summation, higher-priority data groups will receive their full agreed-to amount of bandwidth. Because any lower-level scheduling algorithm can be used as the second layer that makes actual moment-by-moment assignments (i.e., the LLS layer), high-priority data groups can be restricted to consume no more than their agreed-to share of bandwidth. Finally, at times of low bandwidth demand, no data group will be preempted, and busy data groups can then exceed their agreed-to bandwidth.

(c) Communicating the selection to a lower-level scheduler LLS.

The PPS revises its selection of eligible data groups on a time-scale commensurate with the time-scale at which data group flows become busy or empty. It is possible that such dynamic behavior, while highly desirable, may be computationally intense. (For example, the processing required to enable the lower-layer scheduler to change the state of a flow between eligible and ineligible every time the flow becomes busy or empty may be computationally prohibitive in some current systems.) In such circumstances, the reappraisal of the eligibility of data groups can be made over a longer time-scale. However, the time-scale is preferably short enough so that the reappraisal can be made whenever there is a change in available bandwidth.

Referring again to Figures 1 and 2, an exemplary embodiment of several aspects of the present invention may be shown. For example, in a satellite communications system, the PPS may be implemented on board the satellite. Assume a scenario wherein several data groups are already passing through the PPS on board the satellite. The PPS has already been programmed with an available bandwidth threshold for the satellite communication system which is the maximum bandwidth that the PPS can allocate. For this example, assume that available bandwidth threshold is fixed, although the amount of available bandwidth may be adjusted periodically, for example by a ground controller, telecommunications conditions, or ambient conditions.

Each of the data groups received by the PPS is placed on a "busy" list meaning communications are being received for the data group. Additionally, each data group has an associated bandwidth and priority which are also stored in the "busy" list. The PPS prioritizes the busy list and then allocates communication resources to the prioritized listing of data groups on the basis of priority. The PPS allocates communication resources to the data groups in order of priority until the available bandwidth threshold is reached. Any remaining data groups do not receive any communication resources and are consequently preempted. The non-preempted data groups are then passed to a Lower-Level Scheduler (LLS). The LLS may use any type of scheduling discipline, such as weighted round robin (WRR), deficit round robin (DRR), or packet fair queuing (PFQ) to further arbitrate and transmit the non-preempted data groups.

In a further exemplary embodiment, assume that the satellite communications system is operating as described above. Further, the current bandwidth demands of the currently serviced data groups do not exceed the PPS's available bandwidth threshold. That is, no data group is pre-empted and all data groups are passing through the PPS.

Now assume that a new data group (with a predetermined priority and bandwidth) seeks to be added to the PPS. The new data group is received by the PPS and the new data group (including the new data group's priority and bandwidth) is stored in the busy listing. The PPS then preferably reviews the busy listing and determines if the total bandwidth for all data groups (including the n ew d ata group) exceeds the available bandwidth threshold. Consequently, one of three situations arises:

First, the total bandwidth for all data groups (including the new data group) may be less than the available bandwidth threshold. In this case, all data groups, including the new data group are transmitted through the PPS.

Alternatively, the total bandwidth for all data groups may exceed the available bandwidth threshold. In this case, not all of the total data groups will be transmitted through the PPS. Instead, the data groups that will be transmitted are determined based on the priority of the data groups. That is, once the total bandwidth for all data groups exceeds the available bandwidth threshold, the PPS constructs a prioritized listing of all data groups ordering the data groups based on their predetermined priority as was previously stored in the busy list (along with the bandwidth for each group.) The PPS then allocates communication resources to data groups in order of priority. Once all communication resources have been allocated, the remaining data groups are preempted and not transmitted.

Consequently, in the second situation, the new data group possesses a high priority that is sufficient to place the new data group sufficiently high on the priority listing that the new data group is not preempted. In this case, some other data group (that was previously transmitting, in this example) is now preempted by the addition of the new data group to the PPS.

In the third situation, the new data group possesses a low priority that is not sufficient to place the new data group high enough on the priority list and the new data group is consequently pre-empted. In this case, the previously transmitting data groups remain active while the new data group has been preempted based on its low priority.

In the above example, the PPS compares the total bandwidth of the data groups in the busy listing with the available bandwidth threshold and only prioritizes the data groups in the event that the total bandwidth of the data groups in the busy listing exceeds the available bandwidth threshold. Alternatively, the PPS may immediately prioritize each data group as the data group arrives. Immediate prioritization may not be necessary when the system is operating below the available bandwidth threshold, but may allow a faster determination of priority when the system reaches the available bandwidth threshold.

Additionally, although the example above establishes an available bandwidth threshold, pre-emption and allocation of data groups may occur based on other system parameters such as the total demand of the busy data groups, available space in the input buffer (which may alternatively be used for storing the busy listing and the prioritized listing), bandwidth already allocated to data groups, the bandwidth requested by the new data group, the relative priorities of the new and previous data groups, and the delay and delay variation of the data groups.

Additionally, although the sources 21-23 as illustrated in Figure 1 may be conceptualized, for example, as individual user earth terminals in a satellite communications system, each of the sources 21-23 may be one of multiple communications sources within a single user earth terminal, for example. That is, a single user earth terminal may send different data groups with different priorities to the PPS. For example, voice communication may be handled at a higher priority than text or video communication, for example, or vice versa for a single user terminal.

As an additional example, consider a satellite communications system similar to that described in the example above. However, in this example, the total bandwidth of the data groups received by the PPS exceeds the available bandwidth threshold. Consequently, some of the data groups have been preempted. Now consider the situation that a new data group seeks to be added to the PPS.

In this situation, the priority listing for the data groups may be reprioritized to include the new data group. The PPS may then proceed as above, to allocate communication resources on the basis of priority. If the new data group has a high priority, the new data group may be allocated the communication resources that were previously allocated to another data group and the other data group is now pre-empted. Conversely, if the new data group has a low priority, the new data group may be preempted and the earlier data groups may continue operating.

While the invention has been described with reference to one or more preferred embodiments, those skilled in the art will understand that changes may be made and equivalents may be substituted without departing from the invention. In addition, many modifications may be made to adapt a particular step, structure, or material to the teachings of the invention without departing from its scope. Therefore, it is intended that the invention not be limited to the particular embodiment disclosed, but that the invention will include all embodiments falling within the scope of the appended claims.

**Claims**

1. A method for allocating bandwidth among data groups in a communication system (10) for transmitting groups of digital communication data over a communication network, the method comprising the steps of:

   assigning (S100) a predetermined bandwidth and a predetermined priority to each of a plurality of data groups;
   determining (S104) a communications resource threshold for the communication system (10)
   ordering (S106) said plurality of data groups based on said predetermined priority of each data group to form a priority list;
   identifying (S104) the amount of bandwidth requested by the current data groups ;
   summing (PPS) the bandwidth of each of said plurality of data groups to form a total bandwidth demand sum and comparing said sum with said communications resource threshold;
   dividing (PPS) said plurality of data groups into at least one pre-empted data group and at least one non-pre-empted data group based on said priority list and the bandwidth requested when said sum exceeds said communications resource threshold; and
   passing (S108) said at least one non-preempted data group for further processing.

2. The method of claim 1 further including passing (LLS) all of said plurality of data groups when said sum does not exceed said communications resource threshold.

3. The method of claim 1 further including:

receiving (S102) an additional data group;

re-ordering (S106) said plurality of data groups, including said additional data group, based on priority;

re-summing (PPS) the bandwidth of each of said plurality of data groups, including said additional data group, to form a total bandwidth demand sum and comparing said sum with said communications resource threshold;

dividing (PPS) said plurality of data groups, including said additional data group, into at least one pre-empted data group and at least one non-pre-empted data group based on said priority list when said sum exceeds said communications resource threshold; and

passing (S108) said at least one non-preempted data group for further processing.

4. The method of claim 3 wherein said additional data group is a pre-empted data group.

5. The method of claim 3 wherein said additional data group is a non-pre-empted data group.

6. A system (10) for allocating communication resources among a plurality of data groups, each data group including a predetermined bandwidth and a predetermined priority, said system (10) including:

a memory (54) adapted for storing said predetermined bandwidth and predetermined priority associated with each data group, said memory (54) further adapted for storing a communications threshold and the amount of bandwidth requested by the current data groups; and

a processor (60) adapted for ordering said plurality of data groups based on the priority of each data group to form a priority list, summing the bandwidth of each of said plurality of data groups to form a total bandwidth demand sum, comparing said sum with said communications resource threshold, dividing said plurality of data groups into at least one pre-empted data group and at least one non-preempted data group based on said priority list and the bandwidth requested when said sum exceeds said communications resource threshold, and passing said at least one non-preempted data group for further processing.

7. The system (10) of claim 6 wherein said predetermined bandwidth and predetermined priority associated with each data group are stored in a buffer memory (52).

8. The system (10) of claim 6 wherein:

said memory (54) additionally adapted for store a predetermined bandwidth and predetermined priority associated with a new data group; and

said processor (60) adapted for re-ordering said plurality of data groups based on the priority of each data group to form a priority list, re-summing the bandwidth of each of said plurality of data groups to form a total bandwidth demand sum, re-oomparing said sum with said communications resource threshold, and re-dividing said plurality of data groups into at least one pre-empted data group and at least one non-preempted data group based on said priority list when said sum exceeds said communications resource threshold.

9. The system (10) of claim 8 wherein said additional data group is a pre-empted data group.

10. The system (10) of claim 8 wherein said additional data group is a non-pre-empted data group.

**Patentansprüche**

1. Verfahren zum Zuteilen von Bandbreite unter Datengruppen in einem Kommunikationssystem (10) zum Übertragen von Gruppen von digitalen Kommunikationsdaten über ein Kommunikationsnetzwerk, wobei das Verfahren die folgenden Schritte aufweist:

Zuweisen (S100) einer vorbestimmten Bandbreite und einer vorbestimmten Priorität zu jeder einer Vielzahl von Datengruppen;

Bestimmen (S104) eines Kommunikationsressourcenschwellwerts für das Kommunikationssystem (10);

Sortieren (S106) der Vielzahl von Datengruppen beruhend auf der vorbestimmten Priorität jeder Datengruppe, um eine Prioritätenlisten zu bilden;

Identifizieren (S104) der Menge an Bandbreite, die durch die aktuellen Datengruppen angefordert wird;

Summieren (PPS) der Bandbreite jeder aus der Vielzahl von Datengruppen, um eine Gesamtbandbreitenanforderungssumme zu bilden und Vergleichen der Summe mit dem Kommunikationsressourcenschwellwert;

Aufteilen (PPS) der Vielzahl von Datengruppen in zumindest eine vorbelegte Datengruppe und zumindest eine nicht-vorbelegte Datengruppe beruhend auf der Prioritätenliste und der angeforderten Bandbreite, wenn die Summe den Kommunikationsressourcenschwellwert übersteigt; und

Weiterleiten (S108) der zumindest einen nicht-vorbelegten Datengruppe zur weiteren Verarbeitung.

2. Verfahren nach Anspruch 1, ferner umfassend ein Weiterleiten (LLS) aller aus der Vielzahl von Datengruppen, wenn die Summe den Kommunikationsressourcenschwellwert nicht übersteigt.

3. Verfahren nach Anspruch 1, ferner umfassend:

Empfangen (S102) einer zusätzlichen Datengruppe;

erneutes Sortieren (S106) der Vielzahl von Datengruppen einschließlich der zusätzlichen Datengruppe beruhend auf Priorität;

erneutes Summieren (PPS) der Bandbreite jeder aus der Vielzahl von Datengruppen einschließlich der zusätzlichen Datengruppe, um eine Gesamtbandbreitenanforderungssumme zu bilden, und Vergleichen der Summe mit dem Kommunikationsressourcenschwellwert;

Aufteilen (PPS) der Vielzahl von Datengruppen einschließlich der zusätzlichen Datengruppe in zumindest eine vorbelegte Datengruppe und zumindest eine nicht-vorbelegte Datengruppe beruhend auf der Prioritätenliste, wenn die Summe den Kommunikationsressourcenschwellwert übersteigt; und

Weiterleiten (S108) der zumindest einen nicht-vorbelegten Datengruppe zur weiteren Verarbeitung.

4. Verfahren nach Anspruch 3, bei dem die zusätzliche Datengruppe eine vorbelegte Datengruppe ist.

5. Verfahren nach Anspruch 3, bei dem die zusätzliche Datengruppe eine nicht-vorbelegte Datengruppe ist.

6. System (10) zum Zuteilen von Kommunikationsressourcen unter einer Vielzahl von Datengruppen, wobei jede Datengruppe eine vorbestimmte Bandbreite und eine vorbestimmte Priorität umfasst, wobei das System (10) umfasst:

einen Speicher (54), der zum Speichern der vorbestimmten Bandbreite und der vorbestimmten Priorität, die jeder Datengruppe zugeordnet sind, eingerichtet ist, wobei der Speicher (54) ferner zum Speichern eines Kommunikationsschwellwerts und der Menge von Bandbreite, die durch die aktuellen Datengruppen angefordert wird, eingerichtet ist; und

einen Prozessor (60), der eingerichtet ist zum Sortieren der Vielzahl von Datengruppen beruhend auf der Priorität jeder Datengruppe, um eine Prioritätenlisten zu bilden, zum Summieren der Bandbreite jeder aus der Vielzahl von Datengruppen, um eine Gesamtbandbreitenanforderungssumme zu bilden, zum Vergleichen der Summe mit dem Kommunikationsressourcenschwellwert, zum Aufteilen der Vielzahl von Datengruppen in zumindest eine vorbelegte Datengruppe und zumindest eine nicht-vorbelegte Datengruppe beruhend auf der Prioritätenliste und der angeforderten Bandbreite, wenn die Summe den Kommunikationsressourcenschwellwert übersteigt, und zum Weiterleiten der zumindest einen nicht-vorbelegten Datengruppe zur weiteren Verarbeitung.

7. System (10) nach Anspruch 6, bei dem die vorbestimmte Bandbreite und die vorbestimmte Priorität, die jeder Datengruppe zugeordnet sind, in einem Pufferspeicher (52) gespeichert werden.

8. System (10) nach Anspruch 6, bei dem:

der Speicher (54) zusätzlich zum Speichern einer vorbestimmten Bandbreite und einer vorbestimmten Priorität, die einer neuen Datengruppe zugeordnet sind, eingerichtet ist; und

der Prozessor (60) eingerichtet ist zum erneuten Sortieren der Vielzahl von Datengruppen beruhend auf der Priorität jeder Datengruppe, um eine Prioritätenlisten zu bilden, zum erneuten Summieren der Bandbreite jeder aus der Vielzahl von Datengruppen, um eine Gesamtbandbreitenanforderungssumme zu bilden, zum erneuten Vergleichen der Summe mit dem Kommunikationsressourcenschwellwert und zum erneuten Aufteilen der Vielzahl von Datengruppen in zumindest eine vorbelegte Datengruppe und zumindest eine nicht-vorbelegte Datengruppe beruhend auf der Prioritätenliste, wenn die Summe den Kommunikationsressourcenschwellwert übersteigt.

9. System (10) nach Anspruch 8, bei dem die zusätzliche Datengruppe eine vorbelegte Datengruppe ist.

**10.** System (10) nach Anspruch 8, bei dem die zusätzliche Datengruppe eine nicht-vorbelegte Datengruppe ist.

**Revendications**

**1.** Procédé destiné à attribuer une bande passante parmi des groupes de données dans un système (10) de communication, pour transmettre des groupes de données de communication numériques sur un réseau de communication, le procédé comprenant les étapes consistant à :

affecter (S100) une bande passante prédéterminée et une priorité prédéterminée à chacun d'une pluralité de groupes de données ;
déterminer (S104) un seuil de ressources de communication destiné au système (10) de communication ;
mettre en ordre (S106) ladite pluralité de groupes de données, en fonction de ladite priorité prédéterminée de chaque groupe de données, afin de former une liste de priorités ;
identifier (S104) la quantité de bandes passantes demandée par les groupes de données courantes ;
additionner (PPS) la bande passante de chacun de ladite pluralité de groupes de données, afin de former une somme de demandes de bande passante totale et comparer ladite somme audit seuil de ressources de communications ;
diviser (PPS) ladite pluralité de groupes de données en au moins un groupe de données préemptées et au moins un groupe de données non préemptées, en fonction de ladite liste de priorités et de la bande passante demandée, lorsque ladite somme dépasse ledit seuil de ressources de communications ; et
passer (S108) ledit au moins un groupe de données non préemptées destiné à un traitement ultérieur.

**2.** Procédé selon la revendication 1, comprenant en outre le passage (LLS) de toute ladite pluralité de groupes de données, lorsque ladite somme ne dépasse pas ledit seuil de ressources de communications.

**3.** Procédé selon la revendication 1, comprenant en outre les étapes consistant à:

recevoir (S102) un groupe de données supplémentaires ;
remettre en ordre (S106) ladite pluralité de groupes de données, incluant lesdits groupes de données supplémentaires, en fonction de la priorité ;
ré-additionner (PPS) la bande passante de chacun de ladite pluralité de groupes de données, incluant ledit groupe de données supplémentaires, afin de former une somme de demandes de bande passante totale, et comparer ladite somme audit seuil de ressources de communications ;
diviser (PPS) ladite pluralité de groupes de données incluant ledit groupe de données supplémentaires, en au moins un groupe de données préemptées et au moins un groupe de données non préemptées, en fonction de ladite liste de priorités, lorsque ladite somme dépasse ledit seuil de ressources de communications ; et
passer (S108) ledit au moins un groupe de données non préemptées destiné à un traitement ultérieur.

**4.** Procédé selon la revendication 3, dans lequel ledit groupe de données supplémentaires est un groupe de données préemptées.

**5.** Procédé selon la revendication 3, dans lequel ledit groupe de données supplémentaires est un groupe de données non préemptées.

**6.** Système (10) destiné à attribuer des ressources de communication parmi une pluralité de groupes de données, chaque groupe de données comprenant une bande passante prédéterminée et une priorité prédéterminée, ledit système (10) comprenant :

une mémoire (54) adaptée pour mémoriser lesdites bande passante prédéterminée et priorité prédéterminée associées à chaque groupe de données, ladite mémoire (54) étant adaptée en outre pour mémoriser un seuil de communications et la quantité de bandes passantes demandée par les groupes de données courantes ; et
un processeur (60) adapté pour mettre en ordre ladite pluralité de groupes de données, en fonction de la priorité de chaque groupe de données, afin de former une liste de priorités, additionner la bande passante de chacun de ladite pluralité de groupes de données afin de former une somme de demandes de bande passante totale, comparer ladite somme audit seuil de ressources de communications, diviser ladite pluralité de groupes de données en au moins un groupe de données préemptées et au moins un groupe de données non préemptées, en fonction de ladite liste de priorités et de la bande passante demandée, lorsque ladite somme dépasse ledit seuil de ressources de communications, et passer ledit au moins un groupe de données non préemptées destiné à un traitement ultérieur.

7. Système (10) selon la revendication 6, dans lequel lesdites bande passante prédéterminée et priorité prédéterminée associées à chaque groupe de données sont mémorisées dans une mémoire tampon (52).

8. Système (10) selon la revendication 6, dans lequel :

ladite mémoire (54) est en plus adaptée pour mémoriser une bande passante prédéterminée et une priorité prédéterminée associées à un nouveau groupe de données ; et
ledit processeur (60) étant adapté pour remettre en ordre ladite pluralité de groupes de données, en fonction de la priorité de chaque groupe de données, afin de former une liste de priorités, ré-additionner la bande passante de chacun de ladite pluralité de groupes de données afin de former une somme de demandes de bande passante totale, re-comparer ladite somme audit seuil de ressources de communications, et re-diviser ladite pluralité de groupes de données en au moins un groupe de données préemptées et au moins un groupe de données non préemptées, en fonction de ladite liste de priorités, lorsque ladite somme dépasse ledit seuil de ressources de communications.

9. Système (10) selon la revendication 8, dans lequel ledit groupe de données supplémentaires est un groupe de données préemptées.

10. Système (10) selon la revendication 8, dans lequel ledit groupe de données supplémentaires est un groupe de données non préemptées.

# FIG. 1

FIG. 2

S104 — ESTIMATE IS MADE OF DATA-CARRYING ABILITY (E.G., AVAILABLE BANDWIDTH)

S102 — LIST OF DATA GROUPS FROM ADDITIONAL SOURCES IS STORED

S100 — DATA GROUPS FROM ADDITIONAL SOURCES WITH PRIORITY AND AGREED-TO BANDWIDTH SEEK ADMITTANCE TO SCHEDULER

PPS — PREEMPTIVE PRIORITY SCHEDULER

S106 — PRIORITIZED LIST OF DATA GROUPS FROM SOURCES ADMITTED TO SCHEDULER IS STORED

S108 — QUEUE OF ELIGIBLE CURRENT DATA GROUPS IS STORED

LLS — LOWER-LEVEL SCHEDULER

SCHEDULED OUTPUT OF ELIGIBLE DATA GROUPS